# EUROPEAN PATENT APPLICATION

(11) **EP 4 418 645 A1**
(43) Date of publication of application: **21.08.2024**
(21) Application number: 21960588.8
(22) Date of filing: 12.10.2021
(51) Int. Cl.: H04M 3/56

(54) **TELEPHONE CONFERENCE SYSTEM**

(71) Applicant: SYSNA, Inc., Nagoya-shi, Aichi 467-0011 (JP)
(72) Inventor: ASANO Mika, Nagoya-shi, Aichi 451-0042 (JP); SUGIURA Shinichi, Nagoya-shi, Aichi 467-0011 (JP)
(74) Representative: Söllner, Udo
(86) International application number: PCT/JP2021/037791
(87) International publication number: WO 2023/062729

(57) **Abstract**

The telephone conference system disclosed herein may include: a conference circuit configured to allow a plurality of registered telephones to make a call to each other; a telephone exchange storing a telephone number of each of the plurality of registered telephones and is configured to connect the plurality of registered telephones to the conference circuit; and a selection device. When a reception telephone receives a call from an external telephone, the telephone exchange may be configured to connect the external telephone to the conference circuit, and connect a first registered telephone to the conference circuit. The selection device may be configured to allow a user of the first registered telephone to select a second registered telephone to be connected to the conference circuit from among the plurality of registered telephones. The telephone exchange may be configured to connect the second registered telephone to the conference circuit.

## Description

### TECHNICAL FIELD

The disclosure herein relates to a telephone conference system.

### BACKGROUND ART

Japanese Patent Application Publication No. 2018-174393 describes a telephone conference system that enables three or more parties to talk to each other. In this system, when first and second telephones are connected and a conference button on the first telephone is pressed, a processing unit connects each of the first and second telephones to a conference trunk. Consequently, the first and second telephones are connected to each other via the conference trunk. Then, when a call is made from a third telephone to the first telephone, the processing unit connects the third telephone to the conference trunk. Consequently, the first telephone, the second telephone, and the third telephone are connected to each other via the conference trunk, by which a call among the three telephones (i.e., the three parties) can be enabled.

### SUMMARY OF INVENTION

In Japanese Patent Application Publication No. 2018-174393, in order for a third party to participate in a call between the first and second telephones, it is necessary for the third party to perform an operation to make a call. In other words, the two parties on the call cannot directly call the third party. Therefore, in the technique of Japanese Patent Application Publication No. 2018-174393, it is necessary to inform the third party in advance of a date, time, and other details of the telephone conference. This is not convenient, for example, when one wishes to conduct an urgent telephone conference. The present disclosure provides a more convenient technique in a telephone conference system.

### Solution to Technical Problem

A telephone conference system disclosed herein may comprise: a conference circuit configured to allow a plurality of registered telephones registered in advance to make a call to each other; a telephone exchange storing a telephone number of each of the plurality of registered telephones and is configured to connect the plurality of registered telephones to the conference circuit; and a selection device. When a reception telephone connected in advance to the conference circuit receives a call from an external telephone, the telephone exchange may be configured to connect the external telephone to the conference circuit, and connect a first registered telephone predetermined from among the plurality of registered telephones to the conference circuit. The selection device may be configured to allow a user of the first registered telephone to select a second registered telephone to be connected to the conference circuit from among the plurality of registered telephones. The telephone exchange may be configured to connect the second registered telephone selected by the selection device to the conference circuit.

In the above telephone conference system, only by the user of the external telephone making a call to the predetermined reception telephone, the external telephone and the first registered telephone are connected to the conference circuit, by which the both parties can talk on a phone. Further, the user of the first registered telephone selects the second registered telephone, if necessary, and the telephone exchange connects the second registered telephone to the conference circuit. As described above, with this conference call system, a person on a call can have a third party (i.e., the user of the second registered telephone) join as needed, which is highly convenient.

### BRIEF DESCRIPTION OF DRAWINGS

FIG. 1 illustrates a configuration of a telephone conference system.
FIG. 2 illustrates an example of a registration table.
FIG. 3 illustrates an example of a schedule table.
FIG. 4 illustrates a flowchart of a process performed by a telephone exchange.
FIG. 5 illustrates an example of a registered medical institution data screen.
FIS. 6 illustrates a sequence of processes performed by devices when a telephone conference is conducted.

### DETAILED DESCRIPTION

In one embodiment of the technique disclosed herein, the telephone conference system may further comprise: a storage unit configured to store utterance contents of the user of the external telephone and the user of the first registered telephone as voice data; and display unit. The telephone exchange may be configured to convert the stored voice data into text data and display a character string indicated by the text data on the display unit.

In such a configuration, since the utterance contents of the user of the external telephone and the user of the first registered telephone are stored, the voice data (the utterance data) can be used later. In addition, since this voice data is converted to text data and displayed on the display unit as a character string, it is possible to view the utterance contents.

In one embodiment of the technique disclosed herein, the display unit may be configured to be visible to a user of the second registered telephone.

In such a configuration, the user of the second registered telephone can understand, from the character string, the contents of the conversation between the user of the external telephone and the user of the first registered telephone before he/she participates in the telephone conference.

In one embodiment of the technique disclosed herein, the telephone exchange may be configured to generate the text data from the voice data stored in the storage unit by machine learning.

In such a configuration, more accurate text data can be generated by accumulation of the utterance contents and machine learning.

In one embodiment of the technique disclosed herein, the external telephone is installed at a first medical institution which accommodates a specific patient, the first registered telephone is installed at a second medical institution to which an on-duty doctor belongs, and the second registered telephone is installed at a third medical institution to which a medical specialist who can diagnose the specific patient belongs.

In this configuration, for example, when a doctor who can diagnose the condition of a patient taken to the first medical institution does not belong to the first medical institution, a telephone conference can be conducted with the second registered telephone installed at the third medical institution where the medical specialist belongs, via the on-duty doctor, by making a call to the predetermined reception telephone. This is particularly useful when, for example, the particular patient is in a critical condition.

### EMBODIMENTS

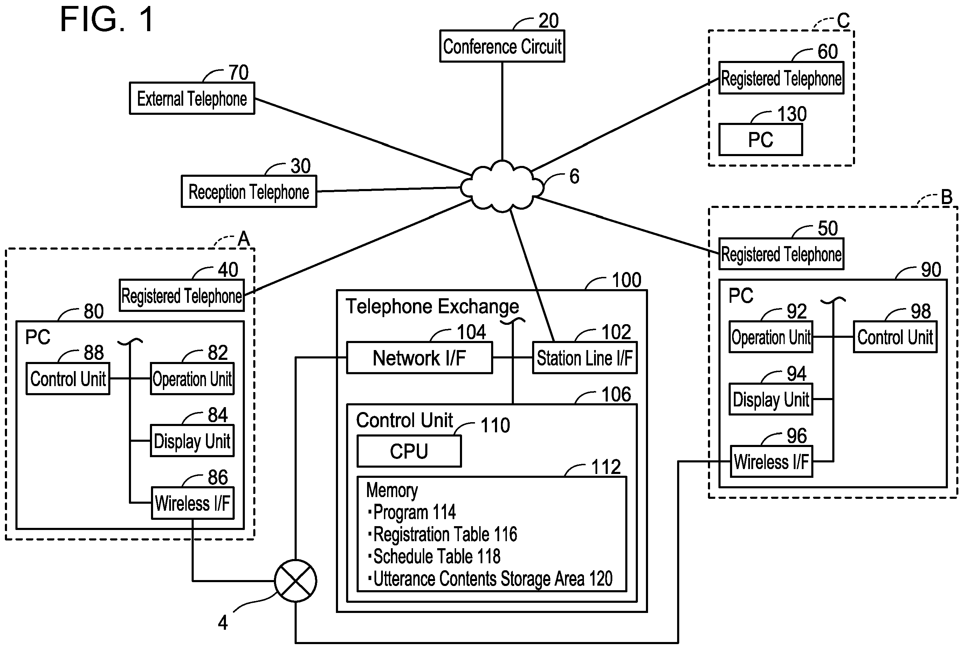

In the followings, a telephone conference system 10 (hereinafter simply referred to as "system 10") of an embodiment will be described with reference to the drawings. The system 10 is a system that allows a plurality of persons to conduct a telephone conference via a conference circuit 20. More specifically, for example, when a medical institution, to which a pediatric patient or a critically-ill patient is brought in, has no doctor who can diagnose such a patient, the system 10 enables doctor(s) and/or the like who belong to this medical institution to conduct a telephone conference with a medical specialist who can diagnose this patient. As illustrated in FIG. 1, the system 10 includes a conference circuit 20, telephones 30, 40, 50, 60, 70, personal computers (PCs) 80, 90, 130, and a telephone exchange 100. A public network 6 is a public network owned by a telecommunications carrier and houses each of the telephones 30 to 70. Each of the telephones 30 to 70 is, for example, a fixed telephone, a mobile telephone, etc. The PCs 80, 90, 130 and the telephone exchange 100 can communicate with each other via the Internet 4.

The conference circuit 20 is configured to enable a call between a plurality of telephones connected to the conference circuit 20. For example, when the registered telephones 40, 50, and 60 to be described later are connected to the conference circuit 20, the conference circuit 20 outputs a signal obtained by synthesizing voice signals inputted from voice inputs units (not illustrated) of the registered telephones 50 and 60 to a voice output unit (not illustrated) of the registered telephone 40. The conference circuit 20 also outputs a signal obtained by synthesizing voice signals inputted from the audio input units of the registered telephones 40 and 60 to the voice output unit of the registered telephone 50. The conference circuit 20 also outputs a signal obtained by synthesizing voice signals inputted from the voice input units of the registered telephones 40 and 50 to the voice output unit of the registered telephone 60.

The registered telephones 40 to 60 are installed at medical institutions. The registered telephone 40 is installed at a medical institution A, the registered telephone 50 is installed at medical institution B, and the registered telephone 60 is installed at a medical institution C. Telephone numbers of the registered telephones 40 to 60 are stored in advance in the memory 112 of the telephone exchange 100, as described in detail later. The registered telephones 40 to 60 may be portable terminals owned by doctors who belong to medical institutions A to C, respectively. Although three registered telephones 40 to 60 are illustrated in FIG. 1, in the system 10, telephone numbers of more than three telephones may be registered in the memory 112 of the telephone exchange 100.

The external telephone 70 is installed at a medical institution different from the medical institutions A to C. The telephone number of the external telephone 70 is not stored in the memory 112 of the telephone exchange 100. The external telephone 70 may be a portable terminal owned by a doctor who belongs to this medical institution.

The reception telephone 30 is installed in order to receive a call from the external telephone 70. Although not illustrated in the drawings, the reception telephone 30 is configured to be connected to the Internet 4. The telephone number of the reception telephone 30 is made known by the administrator of the system 10 and the like via media, such the Internet and advertisements. When receiving a call from the external telephone 70, the reception telephone 30 sends information indicating that it has received the call, together with the telephone number of the external telephone 70, to the telephone exchange 100 via a communication interface (not illustrated).

The PCs 80, 90, and 130 may be stationary devices such as desktop PCs or portable devices such as laptop PCs or tablet PCs. The PC 80 is installed at the medical institution A, the PC 90 is installed at the medical institution B, and the PC 130 is installed at the medical institution C. The PC 80 may be a terminal owned by a doctor who belongs to the medical institution A. The same applies to the PCs 90 and 130. The PC 80 includes an operation unit 82, a display unit 84, a wireless interface 86 (the interface is hereinafter described as "I/F"), and a control unit 88.

The operation unit 82 includes a plurality of keys. The user can input various instructions to the PC 80 by operating the operation unit 82. The display unit 84 is a display for displaying various information.

A wireless I/F 86 is an interface for performing Wi-Fi communication, which is wireless communication according to the Wi-Fi scheme. The Wi-Fi scheme is a wireless communication scheme based on, for example, the 802.11 standard of the Institute of Electrical and Electronics Engineers, Inc. (IEEE) and the equivalent standards (e.g., 802.11a, 11b, 11g, 11n, etc.).

The control unit 88 includes a CPU, a memory (not illustrated), and the like. The CPU executes various processes according to a program (not illustrated) stored in the memory.

The PCs 90 and 130 have the same configuration as the PC80. In FIG. 1, illustration of the operation unit and the like described above are omitted for the PC 130.

The telephone exchange 100 is a device that has a telephone exchange function. In other words, the telephone exchange 100 interconnects telephone lines and constitutes a telephone network. The telephone exchange 100 is also configured to connect the registered telephones 40 to 60 and the external telephone 70 to the conference circuit 20. The telephone exchange 100 is installed, for example, by the administrator of the system 10. The telephone exchange 100 includes a station line I/F 102, a network I/F 104, and a control unit 106. The station line I/F 102 is an interface for executing communication with the public network 6. The network I/F 104 is an interface for executing communication with the Internet 4.

The control unit 106 includes a CPU 110 and a memory 112. The memory 112 is configured of a volatile memory, a nonvolatile memory, and the like. The CPU 110 executes various processes according to the program 114 stored in the memory 112. In addition to the program 114, the memory 112 stores a registration table 116 and a schedule table 118.

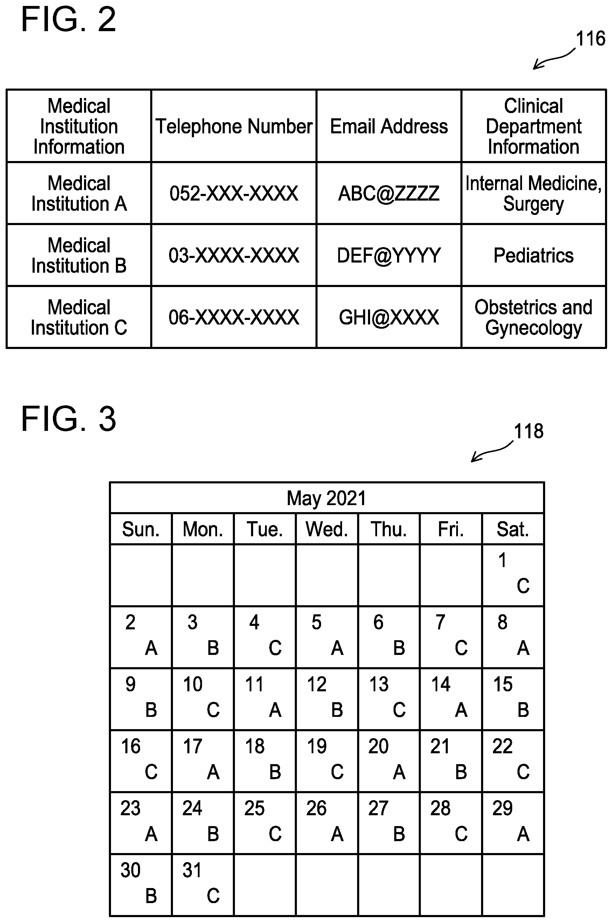

As illustrated in FIG. 2, the registration table 116 stores medical institution information, telephone numbers, e-mail addresses, and department information in association with each other. The medical institution information is information indicating names of medical institutions (medical institutions A to C) registered in the registration table 116. The telephone numbers are telephone numbers of the registered telephones 40 to 60 installed at the medical institutions A to C indicated by the medical institution information (or owned by doctors who belong to the medical institutions A to C). The e-mail addresses are e-mail addresses of the PCs 80, 90, and 130 installed at the medical institution A to C (or owned by doctors who belong to the medical institutions A to C). The department information is information indicating specialties of the doctors who belong to the medical institution A to C. Specifically, for example, as illustrated in FIG. 2, in the registration table 116, the medical institution information "Medical Institution A", the telephone number "052-XXX-XXXX", the e-mail address "ABC@ZZZ", and the department information "Internal Medicine, Surgery" are stored in association with each other.

A calendar and on-duty doctor information are stored in association with each other, as illustrated in FIG. 3. As described below, the on-duty doctor information is information indicating the medical institutions A to C (i.e., doctors on duty for that day) where the registered telephones, which are to be connected to the conference circuit 20 by the telephone exchange 100 when a call is made from the external telephone 70 to the reception telephone 30, are installed. In other words, the on-duty doctor information is information that indicates the medical institution that will be a contact point when a call is made from the external telephone 70 to the reception telephone 30. Specifically, for example, as illustrated in FIG. 3, the schedule table 118 stores the medical institution A where the registered telephone 40 is installed as the contact point on May 17, the medical institution B where the registered telephone 50 is installed as the contact point on May 18, and the medical institution A where the registered telephone 60 is installed as the contact point on May 19.

The memory 112 further includes an utterance contents storage area 120. The utterance contents storage area 120 stores, as voice data, utterance contents between the external telephone 70 and the registered telephone installed at the medical institution that is the contact point. In other words, the utterance contents storage area 120 is an area where voice data inputted from the voice input units (not illustrated) of the telephones 40 to 70 is stored. The CPU 110 can convert the voice data stored in the utterance contents storage area 120 into text data. The CPU 110 may generate text data from the voice data by machine learning.

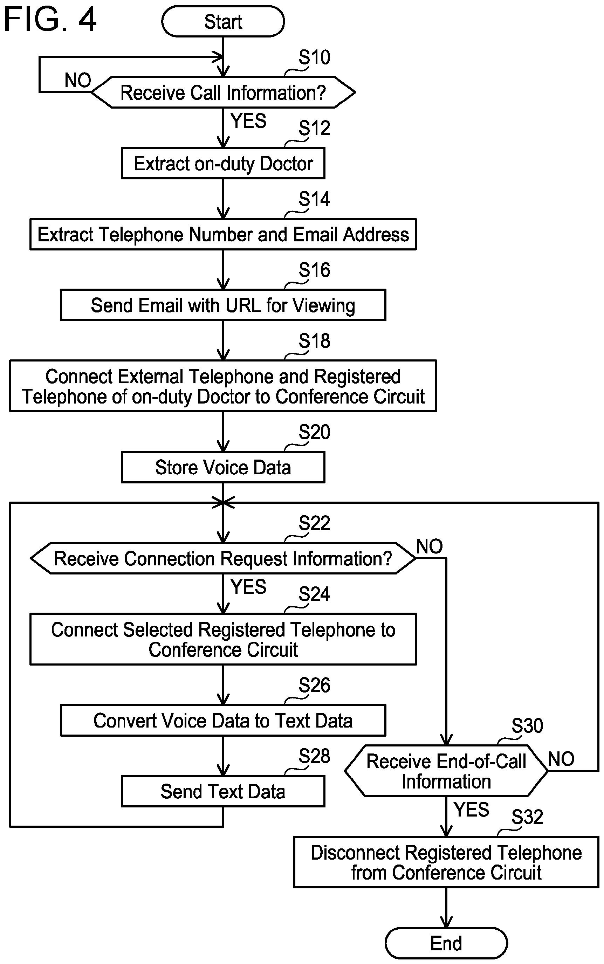

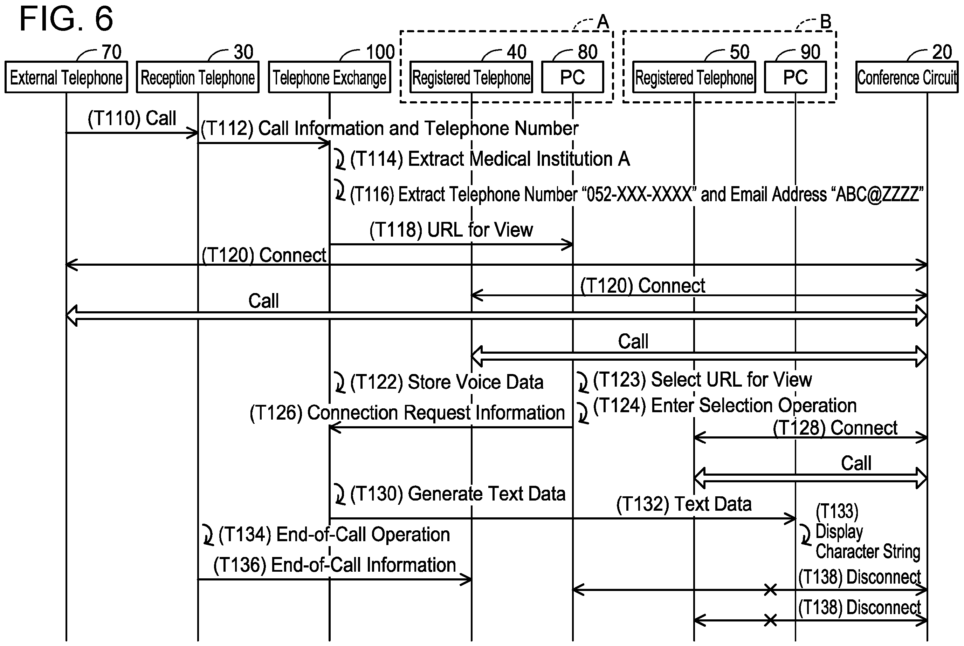

Next, referring to FIG. 4, a process executed by the CPU 110 of the telephone exchange 100 when a telephone conference is conducted by the system 10 will be described. In the following, the description continues assuming that processes in FIG. 4 and FIG. 6, to be described later, are executed on May 17 (see FIG. 3).

First, at S10, the CPU 110 determines whether a call has been made to the reception telephone 30 from the external telephone 70. Specifically, when the CPU 110 receives, from the reception telephone 30 via the network I/F 104, call information indicating that a call has been made from the external telephone 70 (YES at S10), the CPU 110 proceeds to S12.

Next, at S12, the CPU 110 extracts the on-duty doctor for May 17. That is, the CPU 110 refers to the schedule table 118 to extract the medical institution A stored in association with May 17. Then, at S14, the CPU 110 refers to the registration table 116 to extract the telephone number "052-XXX-XXXX" of the registered telephone 40 stored in association with the medical institution A, and the email address "ABC@ZZZZ" of the PC 80 stored in association with the medical institution A.

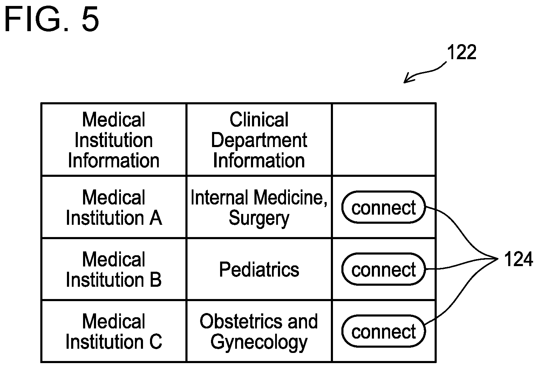

At S16, the CPU 110 sends an e-mail including a Uniform Resource Locator (URL) for viewing to the extracted e-mail address as a recipient. The URL for viewing is information indicating the location of registered medical institution data in the memory 112 of the telephone exchange 100. The registered medical institution data includes medical institution information and medical department information in the registration table 116. In other words, the medical institution data does not include a telephone number or an e-mail address. When an operation to select the URL for viewing which is displayed on the display unit 84 of the PC 80 is inputted, as illustrated in FIG. 5, a registered medical institution data screen 122 indicating registered medical institution data identified by this URL for viewing is displayed on the display unit 84 of the PC 80 of the on-duty doctor. Consequently, the on-duty doctor can understand the medical institutions registered in the system 10 and the specialties.

The CPU 110 connects the external telephone 70 and the registered telephone 40 to the conference circuit 20 at S 18. At S14, the CPU 110 extracted the telephone number of the registered telephone 40. At S10, the CPU 110 received the telephone number of the external telephone 70 from the reception telephone 30 along with the call information from the external telephone 70. Therefore, based on these telephone numbers, the CPU 110 can connect the telephone line of the external telephone 70 and the telephone line of the registered telephone 40 to the conference circuit 20. Consequently, a call can be made between the external telephone 70 and the registered telephone 40.

At S20, the CPU 110 stores the voice data inputted to the voice input units of the external telephone 70 and the registered telephone 40 in the utterance contents storage area 120. Here, each piece of voice data may be stored separately so that the respective pieces of voice data inputted from the voice input units of the telephones 40 and 70 can be distinguished.

Then, at S22, the CPU 110 determines whether connection request information has been received. The connection request information is information to request to connect any of the registered telephones 50 and 60 other than the registered telephone 40 to the conference circuit 20. The registered medical institution data screen 122 illustrated in FIG. 5 includes a plurality of connection buttons 124 respectively corresponding to medical institutions. When the on-duty doctor inputs an operation to select one of the connection buttons 124, the CPU 110 receives the connection request information via the network I/F 104.

When the CPU 110 receives the connection request information (YES at S22), the CPU 110 connects the registered telephone installed in the medical institution included in the connection request information to the conference circuit 20 at S24. In the following, the explanation continues assuming that the connection button 124 corresponding to the medical institution B has been selected. That is, at S24, the CPU 110 connects the registered telephone 50 to the conference circuit 20.

The CPU 110 converts the voice data stored in the utterance contents storage area 120 to text data at S26. In other words, the voice data inputted from the external telephone 70 and the registered telephone 40 is converted to text data. At this time, summary data in which the generated text data is summarized may be created. Then, the CPU 110 sends the text data (or the summary data) to the e-mail address of the PC 90 installed in the medical institution B as a recipient at S28, and returns to S22.

On the other hand, when the CPU 110 does not receive the connection request information (NO at S22), the CPU 110 determines at S30 whether end-of-call information is received from any of the telephones connected to the conference circuit 20. For example, when an end-of-call operation is performed at one telephone connected to the conference circuit 20, the CPU 110 receives the end-of-call information from this one telephone via the network I/F 104. When the CPU 110 receives the end-of-call information (YES at S30), the CPU 110 disconnects all telephones connected to the conference circuit 20 from the conference circuit 20 at S32. When the CPU 110 executes S32, the CPU 32 ends the sequence of process.

Next, referring to FIG. 6, a specific case realized by the process of FIG. 4 will be described. FIG. 6 assumes a situation in which, at a medical institution where a pediatric patient was brought in, there is no doctor who can diagnose this patient. The external telephone 70 is a telephone installed in the medical institution where the pediatric patient was brought in. At T110, a doctor who belongs to the medical institution where the external telephone 70 is installed makes a call to the reception telephone 30.

At T112, the reception telephone 30 sends the call information indicating that a call has been made from the external telephone 70 and the telephone number of the external telephone 70 to the telephone exchange 100 via the communication I/F.

When the telephone exchange 100 receives the call information from the reception telephone 30 (YES at S10 in FIG. 4), the telephone exchange 100 refers to the schedule table 118 at T114 to extract the medical institution A that is stored in association with May 17 (S12). In other words, an on-duty doctor for May 17 is extracted. Then, at T116, the telephone exchange 100 refers to the registration table 116 to extract the telephone number "052-XXX-XXXX" and e-mail address "ABC@ZZZ" stored in association with the medical institution A (S14). At T118, the telephone exchange 100 sends an e-mail including a URL for viewing to the extracted e-mail address "ABC@ZZZZ" as a recipient (S16).

At T120, the telephone exchange 100 connects the external telephone 70 and the registered telephone 40 to the conference circuit 20 by using the telephone number of the external telephone 70 received at T112 and the telephone number of the registered telephone 40 extracted at T116 (S18). This enables a call between the external telephone 70 and the registered telephone 40 via the conference circuit 20.

When a call between the external telephone 70 and the registered telephone 40 starts, the telephone exchange 100 stores the voice data inputted to the voice input units of the external telephone 70 and the registered telephone 40 in the utterance contents storage area 120 at T122 (S20).

Here, as described above, the patient brought into the medical institution where the external telephone 70 is installed is a pediatric patient, while as illustrated in FIG. 2, the specialty of the medical institution A, the on-duty doctor, is internal medicine or surgery. Therefore, at the medical institution A, the pediatric patient cannot be diagnosed in detail. In such a case, at T123, the PC 80 receives an operation to select the URL for viewing contained in the e-mail received at T118 from the doctor (i.e., the on-duty doctor) who responded to the call at the registered telephone 40. As a result, the doctor can view the registered medical institution data screen 122 (see FIG. 5) displayed on the display unit 84 and understands that, among the registered medical institutions, there is a medical institution B that specializes in pediatrics. Then, at T124, the PC 80 receives an operation input from the on-duty doctor to select the connection button 124 corresponding to the medical institution B. Then, at T126, the PC 80 sends the connection request information including information indicating the medical institution B to the telephone exchange 100.

When the telephone exchange 100 receives the connection request information via the network I/F 104 at T126 (YES at S22), the telephone exchange 100 connects the registered telephone 50 installed at the medical institution B included in the connection request information to the conference circuit 20 at T128 by referring to the registration table 116 (S24). This enables a three-way call between the external telephone 70, the registered telephone 40, and the registered telephone 50 via the conference circuit 20.

At T130, the telephone exchange 100 converts the voice data stored in the utterance contents storage area 120 into text data (S26). Then, at T132, the telephone exchange 100 refers to the registration table 116 and sends the generated text data to the e-mail address of the PC 90 installed at the medical institution B as a recipient (S28).

At T133, the PC90 displays, on the display unit 94, character string(s) indicated by the text data received at T132. Consequently, the doctor who belongs to the medical institution B can understand the contents of the call between the doctor of the medical institution where the pediatric patient has been brought in and the doctor who belongs to the medical institution A before he or she participates in the telephone conference.

Then, when the three-party telephone conference ends, the external telephone 70 accepts input of the end-of-call operation at T134. The-of-call operation is, for example, to press a call-end button on the external telephone 70. The input of the end-of-call operation at T134 may be performed on the registered telephone 40 or the registered telephone 50. Then, at T136, the external telephone 70 sends the end-of-call information indicating that the call has ended to the telephone exchange 100.

When the telephone exchange 100 receives the end-of-call information at T136 (YES at S30), the telephone exchange 100 disconnects all telephones connected to the conference circuit 20 from the conference circuit 20 at T138 (S32).

As explained above, with the telephone conference system 10 of the present embodiment, the external telephone 70 and the registered telephone 40 (i.e., the telephone installed at the medical institution A to which the on-duty doctor belongs) are connected to the conference circuit 20 only by the user of the external telephone 70 calling the reception telephone 30, and a call can be made between the both parties. In addition, the doctor who has responded to the call by using the registered telephone 40 performs an operation to select the medical institution B to which the pediatric medical specialist belongs, if necessary, by which the telephone exchange 100 connects the registered telephone 50 to the conference circuit. In this way, this telephone conference system 10 allows person(s) on the call to have a third party (i.e., a medical specialist who belongs to the medical institution B where the registered telephone 50 is installed) participate in a telephone conference as needed, which is highly convenient.

In the system 10 described above, the voice data inputted from the external telephone 70 and the registered telephone 40 is stored in the utterance contents storage area 120 of the telephone exchange 100, by which this voice data (utterance contents) can be used later. In addition, since this voice data is converted into text data and displayed as character string(s) on the display unit 84 of the PC 80 installed in the medical institution B, the medical specialist who belongs to the medical institution B can understand the contents of the conversation between the external telephone 70 and the registered telephone 40 before she or he participates in the telephone conference. This allows a medical specialist who joins the teleconference later to quickly understand the contents of the telephone conference.

In addition, with the system 10 described above, a telephone conference can be held without disclosing telephone numbers or e-mail addresses of users (i.e., users of the external telephone 70 and the registered telephones 40 to 60). This ensures confidentiality about the users of the system 10, which is useful from the viewpoint of privacy protection.

### (Corresponding Relationships)

The registered telephones 40 and 50 are examples of "first registered telephone" and "second registered telephone", respectively. The PC 80 is an example of "selection device". The utterance contents storage area 120 is an example of "storage unit". The display unit 94 of the PC 90 is an example of "display unit". The medical institutions A, B, and C are examples of "first medical institution", "second medical institution", and "third medical institution", respectively.

Specific examples of the present disclosure have been described in detail, however, these are mere exemplary indications and thus do not limit the scope of the claims. The art described in the claims include modifications and variations of the specific examples presented above. Variants of the above-described embodiment are listed below.

### (Variants)

In the embodiment described above, an example where the system 10 is used in the medical field was described. However, the technology disclosed herein is not limited to application in the medical field. For example, the technology disclosed herein may be suitably applied in other fields, such as the judicial field (e.g., lawyers), the financial field (e.g., banks), and the like.

In the embodiment described above, the registered telephone 40 and the PC 80 are installed at the medical institution A. However, the registered telephone 40 and the PC 80 may be integrated. In other words, a single device having functions of both the registered telephone 40 and the PC 80 may be installed at the medical institution A. For example, the registered telephone 40 may include a display and/or a wireless I/F that can be connected to the Internet 4.

Although the above embodiment described an aspect in which a three-way telephone conference is held, it is of course possible to hold a telephone conference among four or more parties. The system 10 may also be configured to execute a plurality of telephone conferences simultaneously. For example, in the schedule table 118, two different medical institutions that serve as contact points may be stored on the same date. In such a configuration, when a call is made to the reception telephone 30 from a different external telephone while one teleconference is in progress, the medical institution that is the second contact point responds, by which two telephone conferences can be executed simultaneously.

The external telephone 70 may not be installed at a medical institution. For example, it may be a portable terminal owned by a family member of an injured or sick person or by a paramedic, and the like, and a conference call may be conducted with the on-duty doctor or medical specialist by making a call to the reception telephone 30 from this portable terminal.

### (Reference Examples)

In the embodiment described above, a three-way telephone conference is conducted by the on-duty doctor selecting, from the registered medical institution data screen 122, a medical institution which is to participate in the telephone conference. However, for example, a telephone number input field may be provided on the registered medical institution data screen 122. In this case, the on-duty doctor may directly enter a telephone number in this input field, by which the telephone exchange 100 may connect the telephone line indicated by this telephone number to the conference circuit 20. Such a configuration is useful, for example, in a situation where the on-duty doctor wishes to have patient's family member(s) and the like participate in the telephone conference.

The technical elements explained in the present disclosure or drawings provide technical utility either independently or through various combinations, and is not limited to the combinations described at the time the claims are filed. Further, the purpose of the examples illustrated by the present disclosure or drawings is to satisfy multiple objectives simultaneously, and satisfying any one of those objectives gives technical utility to the present disclosure.

## Claims

1. A telephone conference system comprising:
a conference circuit configured to allow a plurality of registered telephones registered in advance to make a call to each other;
a telephone exchange storing a telephone number of each of the plurality of registered telephones and is configured to connect the plurality of registered telephones to the conference circuit; and
a selection device;
wherein when a reception telephone connected in advance to the conference circuit receives a call from an external telephone, the telephone exchange is configured to connect the external telephone to the conference circuit, and connect a first registered telephone predetermined from among the plurality of registered telephones to the conference circuit,
the selection device is configured to allow a user of the first registered telephone to select a second registered telephone to be connected to the conference circuit from among the plurality of registered telephones, and
the telephone exchange is configured to connect the second registered telephone selected by the selection device to the conference circuit.

2. The telephone conference system according to claim 1, further comprising:
a storage unit configured to store utterance contents of the user of the external telephone and the user of the first registered telephone as voice data; and
display unit;
wherein the telephone exchange is configured to convert the stored voice data into text data and display a character string indicated by the text data on the display unit.

3. The telephone conference system according to claim 2, wherein
the display unit is configured to be visible to a user of the second registered telephone.

4. The telephone conference system according to claim 2 or 3, wherein
the telephone exchange is configured to generate the text data from the voice data stored in the storage unit by machine learning.

5. The telephone conference system according to any one of claims 1 to 4, wherein
the external telephone is installed at a first medical institution which accommodates a specific patient,
the first registered telephone is installed at a second medical institution to which an on-duty doctor belongs, and
the second registered telephone is installed at a third medical institution to which a medical specialist who can diagnose the specific patient belongs.
